# EUROPEAN PATENT SPECIFICATION

(11) **EP 4 196 838 B1**
(45) Date of publication and mention of the grant of the patent: **09.07.2025**
(21) Application number: 20758135.6
(22) Date of filing: 12.08.2020
(51) Int. Cl.: G02B 27/00, B60S 1/52, B60S 1/56, G01S 7/481

(54) **SENSOR HOUSING, HOUSING-INTEGRATED SENSOR- AND CLEANING-DEVICE AND VEHICLE**
SENSORGEHÄUSE, GEHÄUSEINTEGRIERTE SENSOR- UND REINIGUNGSVORRICHTUNG SOWIE FAHRZEUG
BOÎTIER DE CAPTEUR, DISPOSITIF DE NETTOYAGE ET DE CAPTEUR INTÉGRÉ DANS UN BOÎTIER ET VÉHICULE

(43) Date of publication of application: 21.06.2023
(73) Proprietor: ZF CV Systems Global GmbH, 3006 Bern (CH)
(72) Inventor: BERTOLINA, Guillermo, 1150 Brussels (BE); CLAUSSEN, Heiko, 30455 Hannover (DE); KORTLANG, Tobias, 30989 Gehrden (DE); MAGALHAES PEREIRA, Rodrigo, 81673 München (DE)
(74) Representative: Ohlendorf, Henrike
(86) International application number: PCT/EP2020/072625
(87) International publication number: WO 2022/033673

(56) References cited:
- WO-A1-2016/004936
- WO-A1-2018/231070
- DE-B3- 102014 010 495
- US-A1- 2015 183 406
- US-A1- 2020 159 010

## Description

### FIELD OF THE INVENTION

The invention relates to a sensor housing of the preamble part of claim 1, for being assembled to a vehicle, wherein the sensor housing is further adapted to house at least one sensor for monitoring environmental conditions of the vehicle. The invention further relates to a device with said sensor housing connectable to a sensor.

Vehicles, in particular commercial vehicles --like the one described in US 5,574,426 or US2005/0104322 A1-- have an increasingly high demand of sensoring functions for monitoring environmental conditions of the vehicle. The sensors as such are necessarily exposed to the ambient environment for monitoring purpose and thus, necessarily, are also exposed to impacts from the environment of various kind. These can be detrimental to the sensor functioning as such. Even in normal use, the sensor is subject to deposition of debris like particles of dirt or particles resolved from liquid solutions, which are dried or baked on a sensor surface depending on the surrounding and kind of the environmental exposure of the vehicle.

WO 2018/231070 discloses a housing-integrated sensor- and cleaning-device according to the preamble of claim 1.

Further WO2009/112066 A1 of the applicant relates to a device for arranging environment sensors in a vehicle, by which objects in the vehicle environment can be detected, wherein at least one first and a second environment sensor are disposed in a common housing. The common housing relates to a housing as mentioned in the introduction. The environment sensors are disposed such that a first centerline of the detection range of the first environment sensor points in a different direction than a second centerline of the detection range of the second environment sensor. In a sense, thereby two cooperating sensors of the same kind are adapted to increase a monitoring area of detection without increasing mounting and cabling effort for the two cooperating sensors.

On the other hand, vehicles increasingly take advantage from automated driver assisted systems - these are known as ADAS (Automated Driver Assistance Systems) for automated, autonomous or semi-autonomous driving (AD). The requirements thereof demand for sensors of different kind and purpose and safe availability thereof during function; sensors of different kind are not only related to a visual monitoring by a camera but also include sensors of a RADAR, LiDAR or a camera system or the like. Even for such complex sensor systems the need of a high level of sensoring finesse remains and thus the demand for keeping a sensor clean, in particular the sensor surface as window to the environment is to be kept as clean and as steadily clean as possible.

### BACKGROUND OF THE INVENTION

Whereas a complete protection of the sensor as such is for the above reasons neither possible nor advised the strategy of regular and automatic cleaning of a sensor surface at least has become available in automated servicing of the sensors for upholding a correct and up to demand sensor functioning.

In view of the increasing number of sensors, it has become problematic however that the periphery of cleaning-devices has at least partly become unshaped or bulk and the sensors as such are exposed to the environment unprotected. It is a demand to capture sensoring in an appropriate way while still the sensor is available for automated cleaning.

This is where the invention comes in the object thereof is to propose a useful sensor housing for being assembled to a vehicle wherein the sensor housing is further adapted to house at least one sensor for monitoring environmental conditions of the vehicle. A further object is to provide a housing-integrated sensor- and cleaning-device and vehicle of improved kind wherein the sensor housing also is adapted such that a cleaning of the sensor is possible in an improved way.

In particular, it is a further object of the invention to provide such sensor housing in a way to be available regardless of a special kind of sensor of cleaning demand thereof.

### SUMMARY OF THE INVENTION

The object is achieved by a sensor housing of claim 1. This is a sensor housing as mentioned in the introduction is provided in that the sensor housing is adapted for being assembled to a vehicle, wherein the sensor housing is further adapted to house at least one sensor for monitoring environmental conditions of the vehicle. Therein a sensor adapter is resided in the housing to hold the at least one sensor. The sensor housing according to the invention is provided in that
the adapter has a number of one or more assembly-fittings to hold the at least one sensor in monitoring position, and
- a placeholder is integrated with the housing to hold a washer-body of a cleaning-device in position as to afford cleaning of the at least one sensor.

The invention is starting from the consideration that a sensor housing to house at least one sensor for monitoring environmental conditions should be subject to hold one or more sensor of the mentioned kind regardless of the kind of sensor or form of sensor. The invention has recognized that it is useful to in effect provide a scalable sensor housing, this is in particular a scalable single-sensor housing or multi-sensor housing, which is afforded according to the invention by a sensor adapter having a number of one or more assembly fittings to hold the at least one sensor, this is one or more sensors, in monitoring position.

The adapter assembly fittings thus can be constituted of one or more of single or plural assembly fittings to each hold various kinds or forms of sensors; the assembly fittings can be all of same kind to hold a plurality of identical sensors side by side or in another preferable arrangement. More particularly the number of one or more assembly-fittings are adapted to hold a multitude of sensors, namely a multitude of sensors of the same kind or a multitude of sensors of different kind.

Thus, the adapter in the sensor housing afford that the housing has a kind of scalability to host different sensors from different manufactures in combination or a plurality of sensors of same manufactures or; as the adapter is detachable the adapter can be replaced or exchanged by other adapters on demand - in effect thus, the same sensor housing can be used with various kinds of adapters for various kinds or numbers of a sensors. In short terms, thus the invention provides a scalable sensor housing with integrated cleaning system; the sensor housing is scalable by means of the sensor adapter and further the placeholder as described below. A sensor adapter can also be formed as an adjustable disposition of the sensors inside housing in different monitoring positions like angles and/or placements.

Further, the invention has recognized, that depending on the kind and number of sensors a placeholder should be integrated with the housing to hold a washer-body of a cleaning-device in position as to afford cleaning of the at least one sensor.

The placeholder integrated with the housing is at best a true part of the housing like for instance integrated with the housing's casing like a casing wall or the like carrier wall to hold a washer-body suitable to be used for one or all or at least a useful number of sensors in the sensor housing.

Thus, the number of washer-bodies on the placeholder integrated with the housing can be the same or more or preferably a lower number as compared to the number of sensors. Further, by integrating the placeholder to the housing this feature allows a fixing safe connection of the washer-body with the housing in an integrated solution.

Further according to the invention a connector means is integrated with the housing; this law to connect all plug and connections to on a one and the sensor and the washer-body to afford sufficient functioning thereof. Preferably, only a single plug and connection assembly is provided to connect the housing-integrated sensor- and cleaning-device to a vehicle.

In essence, thereby a plug and play installation is provided with the sensor housing for correct functioning of the sensor and the washer-body to clean the sensor.

In particular, the sensor housing --as an example a scalable single and multi-sensor housing-- can be used for a housing-integrated sensor- and cleaning-device wherein a combination of two or more sensors combined in a single-sensor housing is provided with at least one washer-body. The solution includes at least an insofar integrated washer-body or even a completely integrated cleaning system enabling plug and play solution through fast water/air pipe and cable connection.

The sensor housing of the housing-integrated sensor- and cleaning-device protects the sensors, enables the plug and play installation and keeps sensors available in all conditions by keep it cleaned against debris of dirt and detrimental liquid solutions.

Scalability of the sensor housing can also be implemented by one or more internal housing adapters, which e.g. can be used to host different sensors from different manufacturers in combination; meaning on demand two or more sensors in a sensor housing. Further the adapters can be used not only to integrate different types of sensors but also different or same types of sensors but with different geometries and fixation to a standard housing format. E.g. a sensor housing, respectively an adapter can be used to define on demand various different sensor angles for a sensor according to the use case.

These and further developed configurations of the invention are further outlined in the dependent claims. The dependent claims provide further developments with regard to associated technical advantages. Thereby, the mentioned advantages of the proposed concept are even more improved. For each feature of the dependent claims, it is claimed independent protection independent from all other features of this disclosure.

Preferably, the connector means is integrated with the housing. **In** a particular preferred development, the placeholder and/or connector means is part of the housing wall.

**In** a particular preferred development, the connector means comprising
- an electronic interface to connect the sensor to a data- and/or energy-supply of the vehicle and
- a connection fitting to connect the washer-body to the cleaning-device. Preferably there is only one connector as interface to the vehicle, making final assembly easier (plug and play concept). Still also, there can be a single or multiple connections for cleaning system depending on the need. Single connection enables a single profile of cleaning to all sensors at the same time. Multiple connections enable an independent cleaning profile to each sensor.

**In** a particular preferred development, the washer-body is integrated with the sensor housing on the placeholder. Integrated nozzles allow the existing vehicle cleaning system to be easily integrated with the housing.

**In** a particular preferred development an electronic interface plug and/or a supply-connection plug is integrated with the housing

In a particular preferred development the sensor adapter is resided at an inner side of the housing wall vis-à-vis the placeholder.

In a particular preferred development the sensor housing has a carrier-wall wherein the placeholder is resided on an outer side thereof and the sensor adapter is resided on an inner side thereof vis-à-vis, in particular wherein the carrier wall is adapted to hold on an outer side the placeholder and on an inner side the sensor adapter.

In a particular preferred development, the housing holds a heater element and/or the heater element is integrated in a housing wall, in particular in the carrier-wall. Generally, the housing surface is composed of an omniphobic material/coating that repels dust and any type of contamination. Optionally, the surface incorporates a Heating element to melt snow and prevent ice buildup.

In a particular preferred development, the connector means is placed in the housing away from the carrier-wall.

In a particular preferred development sensor adapter and/or the carrier wall provides an adjustment means for tuning a sensor position, in particular monitoring position, in particular angular position and/or monitoring position.

In a particular preferred development the sensor adapter and/or the placeholder is detachable from the sensor housing, in particular from a housing wall. Thereby the adapter and/or the placeholder replaceable and/or exchangeable.

In a particular preferred development, the sensor adapter is adapted to receive a number of one or more sensors and/or the placeholder is adapted to receive a number of washer-bodies

In a particular preferred development, the sensor is one of the sensors selected from the group consisting of RADAR, LiDAR, optical sensor, in particular camera and/or a headlamp. Advantageously the number of one or more assembly-fittings are adapted to hold a multitude of sensors, namely in combination a multitude of sensors of the kind: RADAR- and/or LiDAR and a camera and a lightening device, particularly a headlamp. It can service a particular demand for a wide 3-D imaging in various ambient brightness and darkness conditions and in particular install positions at the vehicle, which favor integrated high-level ADAS solutions like smart corner monitors etc..

In a particular preferred development, the washer-body is one of the washer-bodies selected from the group consisting of spray body, puls-jet body, liquid- and/or airflow body.

The invention also leads to a housing-integrated sensor- and cleaning-device of claim 18 with a sensor housing of the invention and a cleaning-device connectable to a valve assembly by a pneumatic and hydraulic flow path of a cleaning-device system and a sensor. According to the invention, it is provided that
- the cleaning-device is adapted for wash cleaning, in particular spray cleaning, of a sensor surface of the sensor, the cleaning-device comprising a washer-body connectable by a washer supply-periphery with the valve assembly, wherein
- the valve assembly is adapted for control of selectively supplying liquid fluid from a liquid reservoir to the liquid fluid inlet and/or pressurized air fluid from a pressurized air reservoir to the pressurized air inlet.

In particular the washer-body, in particular spray body, has a washer-nozzle, in particular spray nozzle and a body housing --optionally in common defining a mixing chamber-- with a liquid fluid connection to a liquid inlet and a pressurized air fluid connection to a pressurized air inlet of the body housing, and a spray or washer-path in the spray nozzle for outputting a cleaning fluid to the sensor surface.

Different types of cleaning systems are considered, from fluid or air only cleaning system to any mixture of air / fluid. The meaning of nozzle shall be understood as the entire mechanism that ensures water, air or any mixture of it including venturi mechanism, and valves when required to be near the output point.

The invention also leads to a vehicle of claim 20, in particular a commercial vehicle, comprising an automated drive assistance system (ADAS) with at least one sensor, wherein the at least one sensor of the ADAS-system is part of the inventive housing-integrated sensor- and cleaning-device or housed in the inventive sensor housing.

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is intended that the invention may not be limited to the exact form and detail shown and described herein, nor to anything less than the whole of the invention disclosed herein and as claimed hereinafter. Further the features described in the description, the drawing and the claims disclosing the invention may be essential for the invention considered alone or in combination. In particular, any reference signs in the claims shall not be construed as limiting the scope of the invention. The wording "comprising" does not exclude other elements or steps. The wording "a" or "an" does not exclude a plurality. The wording, "a number of" items, comprises also the number one, i.e. a single item, and further numbers like two, three, four and so forth.

### BRIEF DESCRIPTION OF THE ACCOMPANYING DRAWINGS

The drawings show in:
- FIG.1: schematically a vehicle with a preferred cleaning system,
- FIG.2: specifically a vehicle with a preferred housing-integrated sensor- and cleaning-device of a preferred embodiment of the invention,
- FIG.3: a preferred first embodiment of a sensor housing according to the concept of the invention,
- FIG.4: variants of the preferred first embodiment of a sensor housing according to the concept of the invention,
- FIG.5: a preferred second embodiment of a sensor housing according to the concept of the invention,
- FIG.6: a preferred third embodiment of a sensor housing according to the concept of the invention,
- FIG.7: variants of the preferred third embodiment of a sensor housing according to the concept of the invention,
- FIG.8: in view (A) a preferred fourth embodiment of a sensor housing according to the concept of the invention, in particular adapted for a commercial vehicle as also shown therein, and in view (B) an implementation thereof.

Further details and advantages of different components are explained in the detailed description provided below. The labeling of the elements of different drawings is not to be construed as limiting. The scope of the present invention is defined by one or more claims listed under 'claims' section.

For identical or equivalent items or items of identical or equivalent function in the following, the some reference marks are used. For corresponding features, thus it is referred to the above description.

### DETAILED DESCRIPTION OF THE ACCOMPANYING DRAWINGS

Automated or autonomous driven vehicles, in particular vehicles with automated driver assistance systems (ADAS), use sensor means of various kinds like in the optical or acoustic field or also generally in the field of using wave detection principles like those of RADAR, LIDAR and the like. These and other sensor means also comprise various kinds of cameras in the visual or other wavelength regions of electro-magnetique waves. Whereas a complete protection of the sensor as such is for the above reasons neither possible nor advised the strategy of regular and automatic cleaning of a sensor surface at least has become available in automated servicing of the sensors for upholding a correct and up to demand sensor functioning.

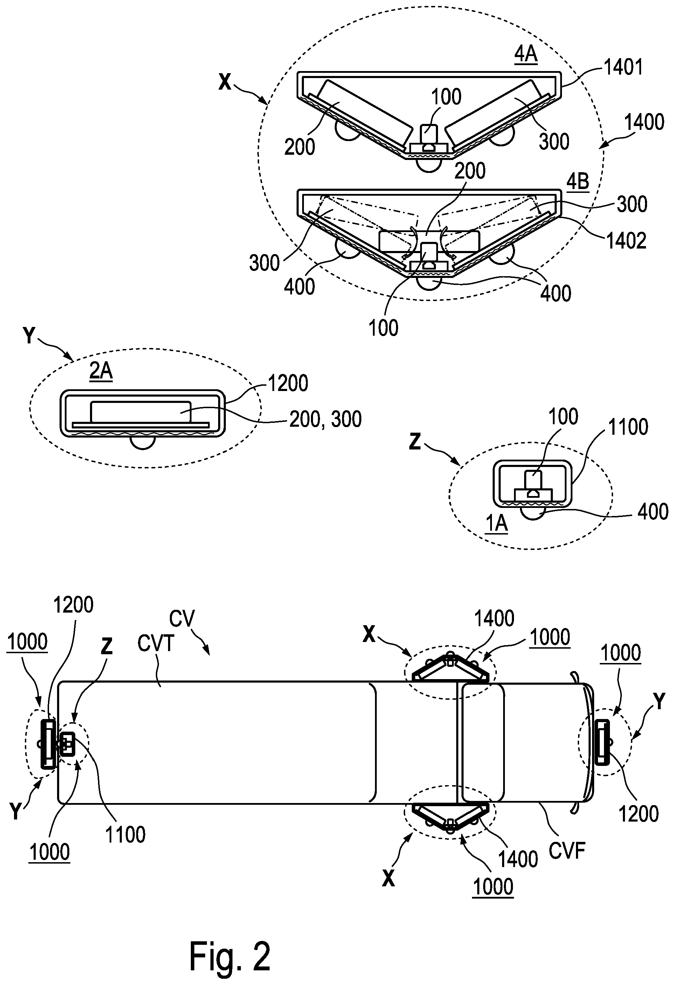

As an example, generally mixing of fluids is basis to provide an undefined water-liquid and air mixture for cleaning of sensors. Automated and/or autonomous vehicles use optical sensors and cameras. These sensors and camera surfaces in use will be clouded with dust and dirt or other kind of debris during riding. The same need to be cleaned on demand for effective functioning of the devices in the vehicle. The instant inventive concept is adapted to provide an improved integrated spray cleaning with a mixture of water-liquid and air mixture, which will be elucidated further with reference to FIG.2 and follow up figures.

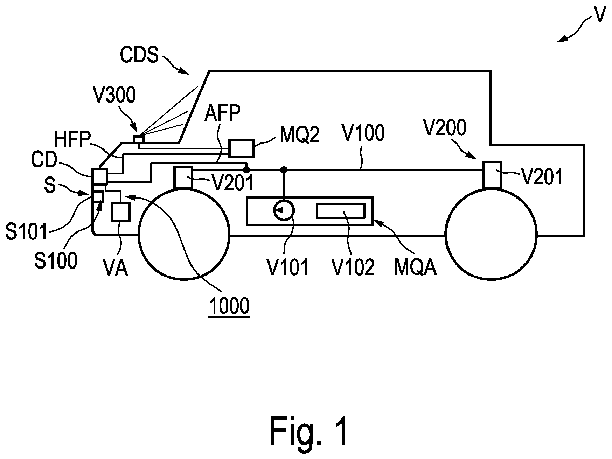

Generally, such kind of inventive cleaning system for cleaning with a mixture of water-liquid and air mixture according to the inventive concept can be provided in a vehicle V that is shown schematically in FIG.1. The vehicle V is meant only as an example in form of a PKW. Still nevertheless, the concept of spray cleaning is useful in particular also for a commercial vehicle CV of use or other kind of vehicles of generally known kind.

The cleaning-device system CDS as shown in FIG.1 in schematic form for the vehicle V is interacting with and adapted to a sensoric system S as also shown in FIG.1 in schematic form.

In detail, the vehicle V is provided with a pressurized air service arrangement V100 and a vehicle pneumatic system V200 that as such provide a compressor V101 or a pressurized container V102, herein below also indicated in general as a pressurized air reservoir MQA. The vehicle pneumatic system V200 in particular comprises an air pressure suspension system with one or more pressure springs V201 is shown e.g. for each wheel of the vehicle.

Further, the vehicle V as such provides a liquid reservoir MQL, in particular for water or the like liquid. For instance, the liquid reservoir MQL can be used as a liquid reservoir for glass pane cleaning in co-working relationship to the vehicle's cleaning system V300, which is also shown schematically with the vehicle V of FIG.1.

The components of the cleaning-device system CDS as depicted in FIG.1 in the vehicle V in detail are assigned to the sensoric system S as further described below. The sensoric system S provides for ADAS (Automated Driver Assistance System) e.g. a camera or an optical sensor or the like sensor means hereinafter referred to as a sensor S100; the sensor S100 has a surface S101.

Further, the cleaning-device system CDS provides a cleaning-device CD with a cleaning spray-body directed to the sensor surface S101 and a device supporting structure carrying a valve assembly VA to operate the cleaning spray-body.

As can be taken from FIG.1 the cleaning-device CD is flow connected by a hydraulic flow path HFP to the liquid reservoir MQL of water and also connected by a pressurized air flow path AFP to the pressurized air reservoir MQA of the vehicle pressurized air service arrangement V100.

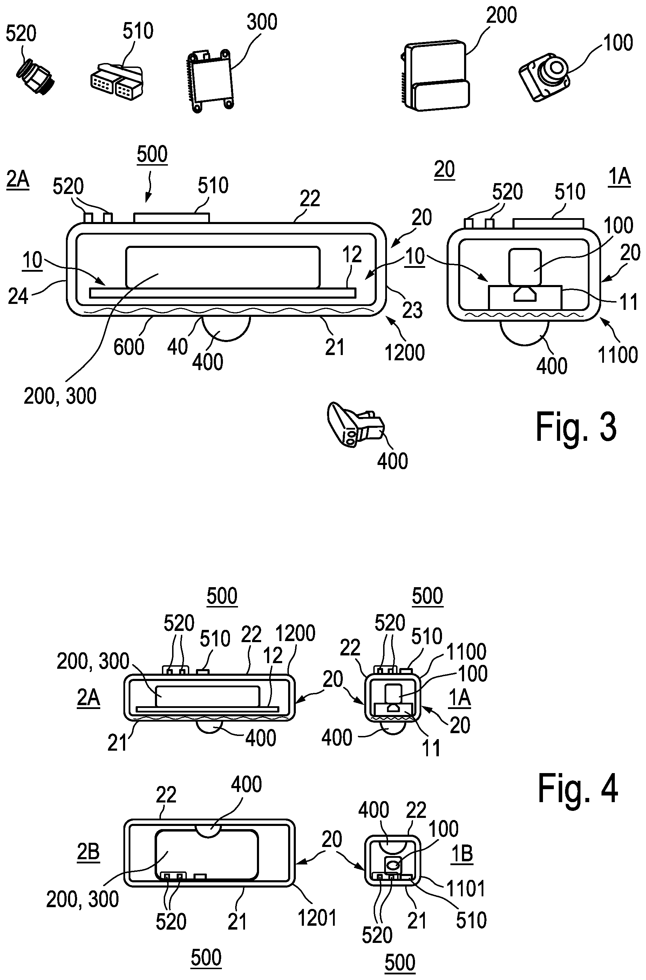

FIG.2 shows a first preferred embodiment of a housing-integrated sensor- and cleaning-device 1A, 2A, 4A, 4B which will be elucidated further with reference to the follow-up figures FIG.3 to FIG.8.

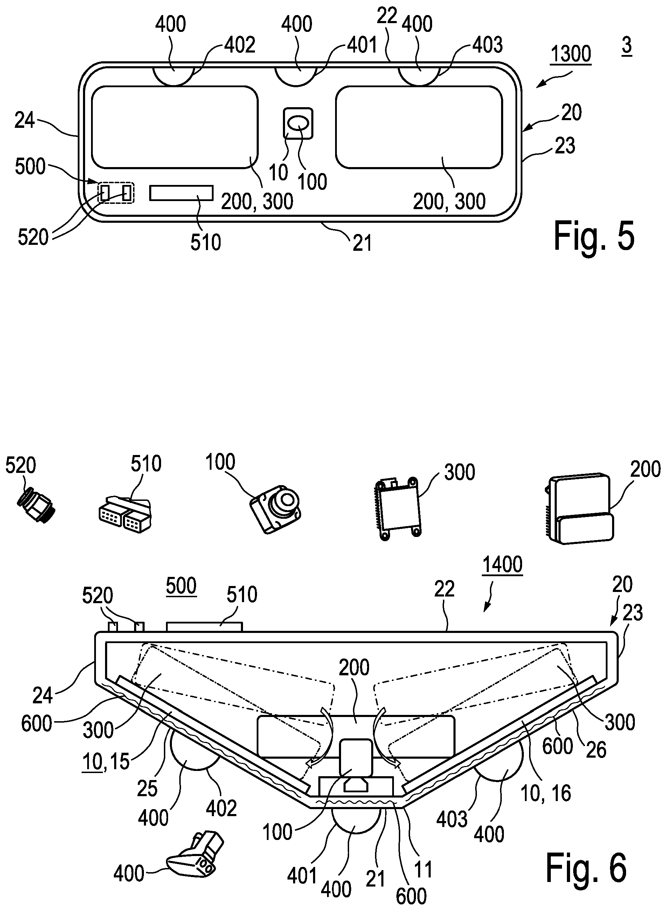

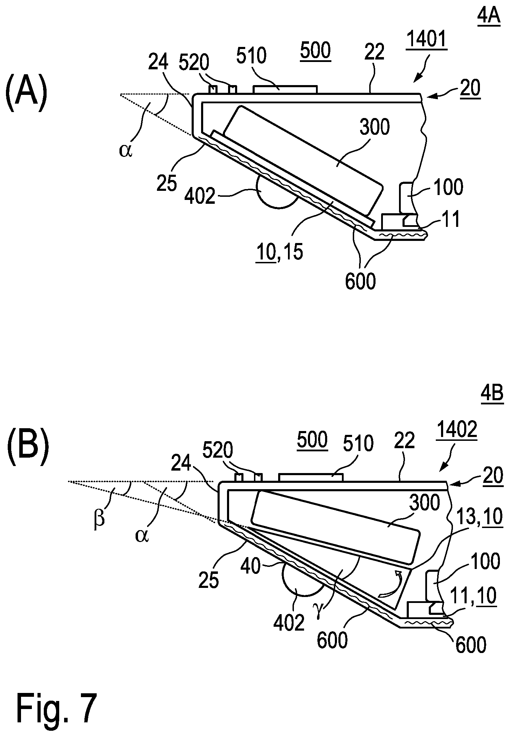

In this case, the sensor housing 1000 is provided in various forms of sensor housings 1100, 1200, 1300 (like further explained in FIG.3 to FIG.5) and sensor housing, wherein the third form 1400 can be provided in a first variant 1401 and a second variant 1402 1400 (like further explained in FIG.6 and FIG.7); the details of the sensor housings 1100, 1200, 1300, 1400 are shown in the details X, Y, Z auf FIG.2.

In this case, the sensor housing 1000 is assembled to a commercial vehicle CV as shown in FIG.2 and a first embodiment of the sensor housing 1100 is shown in the backside in detail Z of the commercial vehicle CV, namely the trailer CVT thereof to monitor the inner environment of the trailer CVT. This is, the first embodiment of the sensor housing 1100 is adapted to house a single sensor 100 for monitoring the inner environmental conditions of the trailer CVT and further is adapted to hold a washer-body 400 of a cleaning-device in position as to effort cleaning of the sensor 100. The sensor sensor housing 1100 is shown in detail Z in FIG.2.

Respectively, another embodiment of the sensor housing 1200 is also shown in the backside of the trailer CVT and assembled thereto, wherein the sensor housing 1200 is adapted to house another sensor 200 or 300 --may it be that this is a LiDAR sensor 200 or a RADAR sensor 300-- for monitoring the outer backside environmental conditions of the trailer CVT. Thus, also in the following, the reference sign 200 is used for a LiDAR sensor and the reference sign 300 is used for a RADAR sensor. The further embodiment of the sensor housing 1200 is shown in detail Y in FIG.2.

A correspondingly same sensor housing 1200 is assembled to the vehicle CV, namely the traction vehicle CVF at the front of the commercial vehicle CV to monitor the outer front part environmental condition of the traction vehicle CVF.

It should be noted that although herein below the single-sensor housing 1100 and the single-sensor housing 1200 is shown and described to be assembled at a front and/or rear of a traction vehicle CVF and a trailer CVT respectively, still nevertheless said single-sensor housings 1100, 1200 can also be assembled, respectively positioned, at any other position of any vehicle CV; this is in particular but not restricted said single-sensor housings 1100, 1200 can also be assembled, respectively positioned, at a side or at a corner or at a vertical or horizontal or other edge of a vehicle CV, even underneath or on top of a vehicle CV. It also applies to the other housings 1300, 1500 shown and described below at certain positions, that theses housings can also be assembled, respectively positioned, at any other position of any vehicle CV

A preferred embodiment of a sensor housing 1400 --may it be that this is a fixed or adaptable sensor housing according to a variant 1401, 1402 of multi-sensor housings-- is assembled in the region between the trailer CVT and traction vehicle CVF, this is either at each or at least one thereof; said sensor housing 1400 of the third embodiment is shown in detail X in FIG.2, each with respective single or multiple washer-bodies 400.

It should be noted that although herein below the mutli-sensor housings 1400, 1401, 1402 are shown and described to be assembled at a side of a traction vehicle CVF and/or a trailer CVT respectively, still nevertheless said mutli-sensor housings 1400, 1401, 1402 can also be assembled, respectively positioned, at any other position of any vehicle CV; this is in particular but not restricted said mutli-sensor housings 1400, 1401, 1402 can also be assembled, respectively positioned, at a front and/or rear or at a corner or at a vertical or horizontal or other edge of a vehicle CV, even underneath or on top of a vehicle CV. It also applies to the other housings 1300, 1500 shown and described below at certain positions, that theses housings can also be assembled, respectively positioned, at any other position of any vehicle CV.

Also, it should be noted that although the shape of housings indicated herewith has shown up to be of particular advantage; still nevertheless the housings can adopt another shape. E.g. the cross-sectional shape of single-sensor housings 1100, 1200 needs not to be quadratic or rectangular. E.g. the cross-sectional shape of multi-sensor housings 1400, 1401, 1402 needs not to be trapezoidal. The cross-sectional shape of all housing shown herewith in a variant can also adopt more or less roundish forms at their corners and edges with on demand small or large edge radius or corner radius. E.g. each of the single-sensor housings 1100, 1200 and multi-sensor housings 1400, 1401, 1402 can adopt a kind of circular, oval or semi-circular, semi-oval shape. This correspondingly also applies to the other housings 1300, 1500 shown and described below.

Whereas the first and second embodiment of the sensor housing 1100, 1200, are hereinafter in part are referred to as straight-view single-sensor housings 1100, 1200, the third embodiment of the sensor housing 1400 is in both variants 1401, 1402 a multi-sensor housing, and further in part is referred to as an angular view sensor housing 1400.

In the following the straight-view sensor housing 1100, 1200 is described in more detail with regard to FIG.3, FIG.4 and FIG.5 in various variants of sensor housings 1100, 1200, 1300 of a housing-integrated sensor- and cleaning-device 1A, 1B, 2A, 2B, 3 wherein the straight-view sensor housing 1300 of the housing-integrated sensor- and cleaning-device 3 in FIG.5 is adapted to receive a multitude of sensors besides a single or multitude of camera sensors 100.

This being said, FIG.3 shows a first and second variant of a straight-view single-sensor housing 1100, 1200 of a housing-integrated sensor- and cleaning- device 1A, 2A. Both have in common that this straight-view sensor housing 1100, 1200 are adapted to house a single sensor 100, 200, 300 for monitoring environmental conditions of a vehicle CV, V. The sensor view angle in both cases is perpendicular to a casing front-wall 21 and a casing back-wall 22 of a rectangular casing 20; thus --as can be seen from FIG.2-- once the housing-integrated sensor- and cleaning-device 1A, 1B, 2A, 2B, 3 is assembled to the vehicle the view angle of monitoring is perpendicular to the main plane of vehicle surface in straight view.

As clearly visible from FIG.3, the sensor can be a camera sensor 100 - here, the first embodiment of the straight-view sensor housing 1100 can be rather small and also, said sensor housing holds a washer-body 400 as indicated above.

A bigger size of a second embodiment of a sensor housing 1200 is also adapted to house a single LiDAR or RADAR sensor 200, 300 and again also is adapted to hold a washer-body 400 of a cleaning-device in position as to effort cleaning of the at least one LiDAR- or RADAR- sensor 200, 300.

In FIG.4, variants of said straight-view single-sensor housings 1100, 1200 are shown with variants of the straight-view single-sensor housings 1101, 1201 of a housing-integrated sensor- and cleaning-device 1A, 1B, 2A, 2B respectively. The difference is well visible therefrom. In particular, it is established that the washer-body 400 in variants of the straight-view single-sensor housings 1100, 1200 is held outside the single-sensor housings 1100, 1200 whereas the washer-body 400 in the variants of the straight-view single-sensor housings 1101, 1201 is held inside of the variant of the straight-view single-sensor housing 1101, 1201 as shown in FIG.4; each of the kinds of single-sensor housing 1100, 1200, 1101, 1201 establishes a straight-view. Further features of the straight-view single-sensor housings 1100, 1101, 1200, 1201 will be described in the following.

As can be seen from FIG.3 and FIG.4, each of the straight-view single-sensor housings 1200, 1201, 1100, 1101 of a housing-integrated sensor- and cleaning-device 1A, 1B, 2A, 2B respectively also feature a sensor and connector means 500, which is established by at first as sensor-connector 510 basically as an electronic interface to connect the sensor to a data and/or energy supply of the vehicle CV, CVT. Further, the connector means 500 is established by a washer-connector 520, which is established as shown, in this case as a fluid quick connection fitting as a single pair of fluid inlet and outlet fittings shared among all washer-bodies 400 rather than individual pairs per washer-body 400. However, here in this case, an individual pair of washer-connectors 520 as fluid inlet and fluid outlet is provided for the single washer-body 400.

This being said, as shown in FIG.3, the sensor 100, 200, 300 is held inside the sensor housing 1100, 1200 at an adapter 10, namely at a respective sensor adapter 11, 12 resided in the housing to hold the at least one sensor 100, 200, 300. The adapter 10 has a number of one or more assembly fittings (not shown) to hold the at least one sensor in monitoring position; this is in this case for establishing a straight-view from the single-sensor housing 1100, 1200.

In a first variant, as shown in the right part of FIG.3, the sensor adapter 11 has a single assembly fitting to hold the camera sensor 100 in monitoring position.

In a second variant, the sensor adapter 12 has an assembly fitting to variably hold different kind of sensors like a LiDAR sensor 200 and RADAR 300 - this is detachable and thus replaceable or exchangeable and different forms of sensors 200, 300, namely for instance a single LiDAR or a single RADAR sensor can be held on demand.

Thus, in essence, the fixed sensor adapters 11, 12 as described is a kind of interface by means of the one or more assembly fittings to be used for multiple sensors independent of the sensor type and manufacturer.

An adjustable or angular adjusted non-fixed sensor adapter 13, 14 is described with FIG. 7 and enables also different options of an angular view by using an non-fixed sensor adapter 13, 14 with variable angle settings, which will be described further below with regard to FIG.6 and FIG.7 - in the straight-view single-sensor housing 1100, 1200 as shown in FIG.3 and FIG.4 an angle-view variant of an adapter 10 as shown with sensor adapters 11, 12 is optional and not shown in these embodiments herein below.

Further, the straight-view single-sensor housing 1100, 1200 as shown in FIG.3 and FIG.4 feature a heater element 600. In this case, the heater element 600 is integrated in a housing wall of the casing 20 of the sensor housing 1100, 1200, wherein the casing 20 of the housing has a casing front-wall 21, a casing back-wall 22 and two -this is a first and second-- casing side-walls 23, 24. The above-mentioned connector means 500 in the variant of the sensor housings 1200, 1100 are resided on the casing back-wall 22 of the casing 20, whereas the washer-body 400 and the heating element 600 is resided at the casing front-wall 21 of the casing 20.

The washer-body 400 and the connector means 500 are placed on the outside of said walls 21, 22.

The heater element 600 is integrated in said casing front-wall 21 of the casing. In this case, the casing front-wall 21 establishes a carrier wall of the casing 20 to hold said adapter 10 for the sensor 100, 200 and to integrate the heater element 600 and further to integrate the placeholder 14 for the washer-body 400. More specifically, optionally a resistance can be installed in the housing surface for heating-up the surface against concentration of snow or ice or just to dry the inner part of the housing. Resistance can be either a conductive surface printing or micro-wires embodied in plastic.

The casing 20 with the casing walls 21, 22, 23, 24 of the housings 1100, 1200, 1201, 1101 and also of the housings 1300, 1400 is preferably composed of an omniphobic material/coating that repels dust and any type of contamination. Optionally, as described above, said omniphobic material/coating incorporates said heating element 600 to melt snow and prevent ice buildup.

Thereby, the placeholder integrated with the housing's casing front-wall 21 a washer-body 400 is safely held in position for a cleaning-device CD, respectively the sensor 100, 200, 300, resided therein - so as to effort cleaning of the at least one sensor 100, 200, 300. More particularly, the washer-body 400 has a washer-nozzle and a washer-body and as such is integrated at least with the nozzle to the housing, more particularly to the casing 20 enables a kind of "plug & play"-connection of fluid, or preferably pressurized airfluid from an air cleaning system.

The arrangements of embodiments as shown in FIG.3 and described therewith can be subject to variants as some of these are shown in FIG.4. One of which has been mentioned before, namely in that therein the washer-body 400 in embodiment variants 1100, 1200 of the sensor housing can be placed with a placeholder at the casing front-wall 21 outside of the housing 1100, 1200. In the variants of the single straight-view sensor housing 1101, 1201, the washer-body 400 can be placed inside the housing; this is said placeholder 40 can be established at the inner side of the casing back-wall 22 to hold said washer-body. Vis-à-vis at an inner side of the casing front-wall, the above-mentioned sensor and connector means 500 can be established. This variant of straight-view single-sensor housings 1101, 1201 has the advantage that the sensor and connector means 500 are protected from the outer environment and also, the washer-body 400 is in direct neighborhood to the sensor 100, 200, 300 and consequently has direct effect in cleaning said sensor.

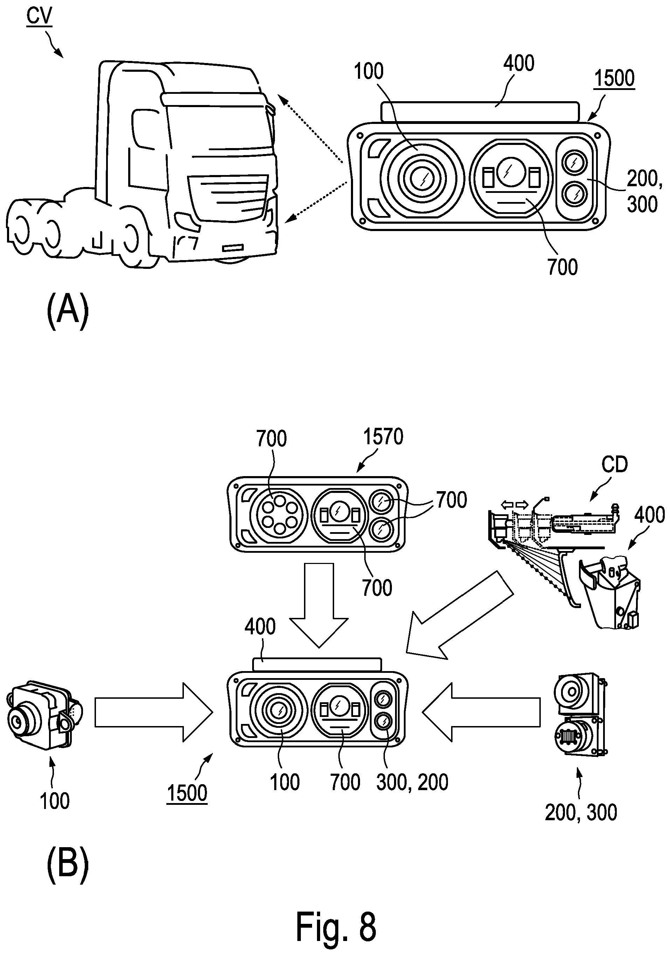

FIG.5 shows an embodiment of a straight-view multi-sensor housing 1300 with a single or multitude of camera sensors 100 for being assembled with a housing-integrated sensor- and cleaning-device 3 to a vehicle V like a PKW, this is a vehicle V of FIG.1 or a commercial vehicle CV as described with FIG.2 or FIG.8 in particular.

In this further developed variant of a straight-view sensor housing 1300, the sensor housing 1300 is in direct development of the aforementioned straight-view sensor housing 1201 with the addition that the sensor housing 1300 is adapted to house a multitude of sensors for monitoring environmental conditions of the vehicle V, CV.

In this case, three sensors of different kind are resided in the housing, which, however, are detachable and thus are able to be exchanged or replaced. In the instant case, the variant of sensor housing 1300 again provides an adapter 10 resided in the housing to hold a camera sensor 100 and further adapters 10 (not shown in detail) are set aside therefrom to hold a LiDAR and/or RADAR sensor 200, 300 on demand and as preferred for use. Thus, the adapters 10 also of this multi-sensor housing for straight-view has a number of in this case three assembly fittings to hold the sensors 100, 200, 300 as shown in monitoring position.

In this case, the variant of sensor housing 1300 similar to the variant of sensor housing 1201 holds the sensors 100, 200, 300 in a way such that the sensing direction is vertical to the casing front-wall 21 and casing back-wall 22 of the casing 20. Thus, in this sense, the multi-sensor housing 1300 holds the sensors 100, 200, 300 in a straight view vertical to the front-end back-wall 21, 22 as described above.

Further, similar to the straight-view single-sensor housing 1201, in this case a placeholder is integrated into the back-wall 22 of the housing to hold a multitude of washer-bodies 401, 402, 403 in position to effort cleaning the sensors 100, 200, 300.

In this case, the placeholder indicated by reference sign 40 is adapted to hold all of the washer-bodies 401, 402, 403 and is integrated into the casing back-wall 22 of the casing. In the instant case, each of the washer-bodies 401, 402, 403 respectively is assigned to each of the sensors 100, 200, 300 respectively; thus, for each sensor exactly one washer-body 401, 402, 403 is provided respectively. In a variant not shown here, it is also possible to provide a single washer-body 400, which is in position as to effort cleaning of all the sensors in the sensor housing.

Also, similar to the embodiment of the sensor housing 1201, in this case the multi-sensor straight-view sensor housing 1300 features a sensor and connector means 500 as described before with a sensor-connector 510 and a washer-connector 520 in the same manner as described before; this is, the sensor and connector means 500 is integrated into the housing at the inner side of the casing front-wall 21 and further adapted to connect all of the sensors 100, 200, 300 in the sensor housing 1300.

FIG.6 shows another qualitatively different kind of multi-sensor housing 1400 with a single or multitude of camera sensors 100 of a housing-integrated sensor- and cleaning-device 4 wherein for features of the same kind or same function, the same reference marks are used for simplicity; respectively, the above-mentioned description also applies to the further embodiment of multi-sensor housing 1400.

FIG.6 shows variants of an angular-view multi-sensor housing 1400, 1401, 1402 - they have in common that the variants of angular-view sensor housing 1400, 1401, 1402 are adapted to house multiple sensors 100, 200, 300 for monitoring environmental conditions of a vehicle CV, V. All of these variants can also provide a position for a multitude of camera sensors 100 to allow an increased coverage of a view angle angular field to the environment, preferably to allow an increased coverage of an angular field of near 120°or up to 180° or an even larger angular field for the view angle to the environment.

A sensor view angle in all cases is not perpendicular to a casing front-wall 21 and a casing back-wall 22 but in an angle thereto in a trapezoidal casing 20; thus --as can be seen from FIG.2-- once the respective housing-integrated sensor- and cleaning-device 4A, 4B is assembled to the vehicle the view angle of monitoring is not perpendicular but in an acute angle to a main plane of vehicle surface in angular view.

The multi-sensor housing 1400, as mentioned before, can be adapted so as to provide an angular view of at least part of the sensors for monitoring environmental conditions of a vehicle, this is, the respective monitoring angle of the LiDAR and/or RADAR sensor 200, 300 placed therein, can be varied in a predefined form or they are variable. E.g., also the angular view can be varied by actuating the adapter when respective actuators are also provided in the housing in a transient way. This is an acute angle different from the wall direction can be set on demand, which will be described further below.

In the instant case, the casing 20 of the angular view multi-sensor housing 1400 has two casing side-walls 23, 24 and a casing back-wall 22 with connector means 500 as described before, for instance with sensor housings 1100, 1200.

However, the casing front-wall 21 in this case of sensor housing 1400 is enlarged and provides a wide inner space of the trapezoidal sensor housing 1400. This is afforded in that the front side 21 provides a sensor adapter 11 for the camera sensor 100 and this, in combination with a LiDAR sensor 200 plus the outside casing front-wall 21 placeholder for the washer-body 401 of a cleaning-device in position as to afford cleaning of the camera sensor 100 and the LiDAR sensor 200. The casing front-wall 21 functions as a carrier wall to hold the sensor adapter 11 and to integrate the placeholder and to integrate a heater element 600 as described before with, for instance, a sensor housing 1100, 1200.

Further, the trapezoidal casing 20 provides a left side angular casing front-wall 25 and a right side angular casing front-wall 26 in direct connection between casing front-wall 21 and casing side-walls 23, 24, wherein each of the angular casing front-walls 25, 26 also again features to hold a sensor adapter 15, 16.

These are shown in more detail in view (A) of FIG.7 for the left side part of the casing. This is the left side angular casing front-wall 25 again is used as a carrier wall for holding a sensor adapter 15 to hold a RADAR sensor 300, wherein here, this sensor adapter 15 has an assembly fitting to hold the RADAR sensor 300 in monitoring position. The monitoring position is plain with the angular casing front-wall 25 and thus allows an angular supervision of the environmental condition of the vehicle; the angle is set by the angle between angular casing front-wall 25 and back casing sidewall 22.

In a variant as shown in view (B) of FIG.7, again, the left side angular casing front-wall 25 is used as a carrier wall for holding a sensor adapter 13 integrating a heater element 600 and integrating a placeholder 40 for the washer-body 402.

Further, the sensor adapter 13 --in variation to the sensor adapter 15 described before-- can be adapted in amending the acute angle α as described before; namely in diminishing the acute angle α to an even smaller acute angle *β*, which is smaller than the angle α. Thus, the originally fixed angular monitoring direction of an acute angle *α* can be flattened to an acute angle *β*, which is nearer to a straight-view monitoring direction for the RADAR sensor 300. Acute angle in this case is to be understood not in a strict mathematical sense but more generally in that an acute angle *α* and acute angle *β* is to be understood generally as an angle different from 90°.

Thus, the angular casing front-wall 25 of the angular view multi-sensor housing 1400 allows for the RADAR sensor 300 to be adapted in a monitoring angle between a large angle α to a lower monitoring angle *β*. It can be adapted even such that the RADAR sensor 300 could be used for straight view, when the adapting angle *γ* is set large enough to put the RADAR sensor 300 in parallel position to the casing back-wall 22 of the casing 20. Corresponding measures are possible for a LiDAR sensor 200 instead of a RADAR sensor and also for any other kind of sensor like a camera sensor 100 instead.

FIG.8 shows in view (A) a preferred fourth embodiment of a sensor housing 1500 for a further kind of a housing-integrated sensor- and cleaning-device 5 for a commercial vehicle CV at exemplary positions indicated by arrows in view (A) of FIG.8. Exemplary positions indicate install positions at the vehicle, which favor integrated high-level ADAS solutions like smart corner monitors etc.. The sensor housing 1500 is realized as a kind of head light sensor housing according to the concept of the invention. In particular the sensor housing 1500 can establish in addition to a standard headlamp function (not shown) an additional auxiliary head lamp function.

It should be noted that although the shape of housings indicated herewith has shown up to be of particular advantage; still nevertheless the sensor housings 1500 can adopt another shape; e.g. as has been indicated before with regard to other multi-sensor housings 1400, 1401, 1402 e.g.. Thus, also the sensor housing 1500 can provide a position for a multitude of camera sensors 100 to allow an increased coverage of a view angle angular field to the environment, preferably to allow an increased coverage of an angular field of near 120°or up to 180° or an even larger angular field for the view angle to the environment. The sensor housing 1500 also has been found to be of particular advantage to realize a smart corner application.

It should also be noted that although herein below the sensor housing 1500 are shown and described to be assembled at a front and/or horizontal edge of a vehicle CV, still nevertheless said sensor housing 1500 can also be assembled, respectively positioned, at any other position of any vehicle CV; this is in particular but not restricted said sensor housing 1500 can also be assembled, respectively positioned, at a front and/or rear or at a corner or at a vertical or horizontal or other edge of a vehicle CV, even underneath or on top of a vehicle CV.

In particular the sensor housing 1500 can establish in addition to a standard headlamp function (not shown) an additional auxiliary head lamp function at front and/or rear and/or side of the vehicle CV. The sensor housing 1500 also has been found to be of particular advantage to realize a smart corner application.

In view (B) of FIG.8 a way of implementation thereof with a washer-body 400 of a cleaning device CD of a cleaning system CDS, a camera sensor 100 or the like sensor means like in in this case also a LiDAR sensor 200 and/or RADAR sensor 300 and said head light 700. The head light 700 can be realized preferably as any kind of LED. The headlight 700 serves for any kind of visible and/or infrared illumination; this the available electro-magnetic spectrum of wavelength. This kind of sensor housing 1500 shown in FIG.8 is in particular adapted for a commercial vehicle CV as shown in view (A).

This kind of sensor housing 1500 thus further implements a head light 700, wherein the head light 700 is shown integrated in the middle next to the camera 100 and next to the LiDAR sensor 200 and/or RADAR sensor 300; thus between them in the sensor housing 1500.

The head light in this case is integrated as a more or less intelligent main or auxiliary head lamp. The head light sensor housing 1500 is of particular use for large scale commercial vehicles CV like the main truck machine shown in view (A) to FIG.8 but also in commercial vehicles CV of increased security standards like a school bus or a mining truck. It can thus be implemented for object and/or person detection but also in path finding, tracking and ADAS and the like smart applications during all day and night times. It can service a particular demand for a wide 3-D imaging in various ambient brightness and darkness conditions and in particular install positions at the vehicle, which favor integrated high-level ADAS solutions like smart corner monitors etc.

As can be seen form view (B) of FIG.8, this kind of embodiment of sensor housing 1500 has been found to be of particular use as it has been found in shape analog or similar to the usual kind of head light housing 1570. More particular the design reference is based on a head light housing 1570 of a standard auxiliary headlamp and thus a housing's basis is readily available. This standard auxiliary headlamp of a head light housing 1570 is used as housing's basis of sensor housing 1500 further for integrating (indicated by arrows in view (B) of FIG.8) the washer-body 400, the camera sensor 100 or the like sensor means like in in this case a LiDAR and/or RADAR sensor 200, 300 as clearly seen in view (B) of FIG.8.

Thus, the as such available standard auxiliary headlamp is adaptable as indicated in view (B) of FIG.8 for the further embodiment of a sensor housing 1500 to provide an intelligent housing-integrated sensor- and cleaning-device 5 according to the concept of the invention.

### List of reference signs (part of the description)

- S: sensoric system
- S100: sensor
- S101: sensor surface
- V: vehicle
- V100: vehicle pressurized air service arrangement
- V101: compressor
- V102: pressurized container
- MQA: pressurized air reservoir
- MQL: liquid reservoir
- V200: vehicle pneumatic system
- V201: springs
- V300: vehicle cleaning system
- CDS: cleaning-device system
- CD: cleaning-device
- HFP: hydraulic flow path to the liquid reservoir MQL
- AFP: pressurized airflow path to the pressurized air reservoir MQA
- CV: commercial vehicle
- CVT: trailer of the commercial vehicle
- CVF: traction vehicle
- 1A, 1B, 2A, 2C, 3, 4, 4A, 4B, 5: housing-integrated sensor- and cleaning-device
- 10: adapters
- 11, 12: fixed sensor adapters
- 13, 14: non-fixed first and second sensor adapter at angular casing front-wall
- 15, 16: fixed first and second sensor adapter at angular casing front-wall
- 20: casing
- 21: casing front-wall
- 22: casing back-wall
- 23, 24: first and second casing sidewall
- 25, 26: first and second angular casing front-wall
- 40: placeholder

- 100, 200, 300: sensor; camera, LiDAR, RADAR
- 400: washer-body
- 401, 402, 403: washer-bodies
- 500: connector means
- 510: sensor-connector
- 520: washer-connector
- 600: heater element
- 700: head light

- 1000: various sensor housings
- 1100, 1200: single-sensor housings
- 1101, 1201: variant of single-sensor housings
- 1300, 1400: multi-sensor housings
- 1401, 1402: variant of multi-sensor housings
- 1500: head light sensor housing
- 1570: head light housing 1570

## Claims

1. Housing-integrated sensor- and cleaning-device (1A, 1B, 2A, 2B, 3, 4, 4A, 4B) with
a sensor housing (1000) for being assembled to a vehicle (V), in particular a commercial vehicle (CV), and a connector means (500) is integrated with the housing, wherein the sensor housing (1000) is further adapted to house at least one sensor (100, 200, 300, 400) to be connected to the connector means (500) and for monitoring environmental conditions of the vehicle (V), wherein a sensor adapter (10) is resided in the housing to hold the at least one sensor (100, 200, 300, 400),
wherein the adapter (10) has a number of one or more assembly-fittings to hold the at least one sensor (100, 200, 300, 400) each in a monitoring position, and
- a placeholder (40) is integrated with the housing to hold a washer-body of a cleaning-device in position as to afford cleaning of the at least one sensor,
and
a cleaning-device (CD) connectable to a valve assembly (VA) by a pneumatic and hydraulic flow path (AFP, HFP) of a cleaning-device system (CDS) and a sensor (S) **characterized in that**
- the cleaning-device (CD) is adapted for wash cleaning, in particular spray cleaning, of a sensor surface (S101) of the sensor (S), the cleaning-device (CD) comprising a washer-body (400) connectable by a washer supply-periphery with the valve assembly (VA), wherein
- the valve assembly (VA) is adapted for control of selectively supplying liquid fluid from a liquid reservoir (MQL) to the liquid fluid inlet and/or pressurized air fluid from a pressurized air reservoir (MQA) to the pressurized air inlet.

2. Housing-integrated sensor- and cleaning-device (1A, 1B, 2A, 2B, 3, 4, 4A, 4B) of claim 1 **characterized in that** the number of one or more assembly-fittings are adapted to hold a multitude of sensors, namely a multitude of sensors of the same kind or a multitude of sensors of different kind.

3. Housing-integrated sensor- and cleaning-device (1A, 1B, 2A, 2B, 3, 4, 4A, 4B) of claim 1 or 2 **characterized in that** the placeholder and/or connector means is part of the housing wall.

4. Housing-integrated sensor- and cleaning-device (1A, 1B, 2A, 2B, 3, 4, 4A, 4B) of one of the claims 1 to 3 **characterized in that** the connector means (500) comprises
- a sensor-connector (510) in form of an electronic interface to connect the sensor to a data- and/or energy-supply of the vehicle and
- a washer-connector (520) in form of a connection fitting to connect the washer-body to the cleaning-device.

5. Housing-integrated sensor- and cleaning-device (1A, 1B, 2A, 2B, 3, 4, 4A, 4B) of one of the claims 1 to 4 **characterized in that** the washer-body (400) is integrated with the sensor housing on the placeholder (40).

6. Housing-integrated sensor- and cleaning-device (1A, 1B, 2A, 2B, 3, 4, 4A, 4B) of one of the claims 1 to 5 **characterized in that** an electronic interface plug and/or a supply-connection plug is integrated with the housing.

7. Housing-integrated sensor- and cleaning-device (1A, 1B, 2A, 2B, 3, 4, 4A, 4B) of one of the claims 1 to 6 **characterized in that** the sensor adapter is resided at an inner side of the housing wall vis-à-vis the placeholder.

8. Housing-integrated sensor- and cleaning-device (1A, 1B, 2A, 2B, 3, 4, 4A, 4B) of one of the claims 1 to 6 **characterized in that** the sensor housing (1000) has a carrier-wall, wherein the placeholder (40) is resided on an outer side of the carrier-wall and the sensor adapter is resided on an inner side of the carrier-wall.

9. Housing-integrated sensor- and cleaning-device (1A, 1B, 2A, 2B, 3, 4, 4A, 4B) of one of the claims 1 to 8 **characterized in that** the placeholder and the sensor adapter are arranged vis-à-vis to each other, advantageously wherein the carrier wall is adapted to hold on the outer side the placeholder (40) and on an inner side the sensor adapter (10).

10. Housing-integrated sensor- and cleaning-device (1A, 1B, 2A, 2B, 3, 4, 4A, 4B) of one of the claims 1 to 9 **characterized in that** the housing holds a heater element (600) and/or the heater element is integrated in a housing wall of the casing (20), in particular in the carrier-wall.

11. Housing-integrated sensor- and cleaning-device (1A, 1B, 2A, 2B, 3, 4, 4A, 4B) of one of the claims 1 to 10 **characterized in that** the connector means (500) is placed in the housing away from the carrier-wall.

12. Housing-integrated sensor- and cleaning-device (1A, 1B, 2A, 2B, 3, 4, 4A, 4B) of one of the claims 1 to 11 **characterized in that** the sensor adapter (10) and/or the carrier wall provides an adjustment means for tuning the monitoring position, in particular angular and/or placement position.

13. Housing-integrated sensor- and cleaning-device (1A, 1B, 2A, 2B, 3, 4, 4A, 4B) of one of the claims 1 to 12 **characterized in that** the sensor adapter (10) and/or the placeholder (40) is detachable from the sensor housing, in particular from a housing wall of the casing (20).

14. Housing-integrated sensor- and cleaning-device (1A, 1B, 2A, 2B, 3, 4, 4A, 4B) of one of the claims 1 to 13 **characterized in that** the sensor adapter (10) is adapted to receive a number of one or more sensors (100, 200, 300) and/or the placeholder (40) is adapted to receive a number of one or more washer-bodies (400, 401, 402, 403).

15. Housing-integrated sensor- and cleaning-device (1A, 1B, 2A, 2B, 3, 4, 4A, 4B) of one of the claims 1 to 14 **characterized in that** the sensor (100, 200, 300) is one of the sensors selected from the group consisting of RADAR-, LiDAR-, optical sensor, in particular a camera and/or a lightening device, particularly a head light.

16. Housing-integrated sensor- and cleaning-device (1A, 1B, 2A, 2B, 3, 4, 4A, 4B) of one of the claims 1 to 15 **characterized in that** the number of one or more assembly-fittings are adapted to hold a multitude of sensors, namely in combination a multitude of sensors of the kind: RADAR- and/or LiDAR and a camera and a lightening device, particularly a lightening device in form of a head light.

17. Housing-integrated sensor- and cleaning-device (1A, 1B, 2A, 2B, 3, 4, 4A, 4B) of one of the claims 1 to 16 **characterized in that** the washer-body (400) is one of the washer-bodies selected from the group consisting of spray body, puls-jet body, liquid- and/or air flow body.

18. Housing-integrated sensor- and cleaning-device of one of the claims 1 to 17, **characterized in that** the washer-body (400) has a washer-nozzle and a body housing, with a liquid fluid connection to a liquid inlet and a pressurized air fluid connection to a pressurized air inlet of the body housing, and a washer-path in the washer-nozzle for outputting a cleaning fluid to the sensor surface, in particular wherein the washer-body (400) is a spray body with a spray nozzle and a mixing chamber.

19. Vehicle (V), in particular commercial vehicle (CV) with at least one housing-integrated sensor- and cleaning-device according to one of the claims 1-18, with at least one sensor,
wherein the at least one sensor (S100), is in particular of an ADAS-system.

## Patentansprüche

1. Gehäuseintegrierte Sensor- und Reinigungsvorrichtung (1A, 1B, 2A, 2B, 3, 4, 4A, 4B) mit
einem Sensorgehäuse (1000) zur Montage an einem Fahrzeug (V), insbesondere einem Nutzfahrzeug (NV), und eine in das Gehäuse integrierte Anschlusseinrichtung (500), wobei das Sensorgehäuse (1000) ferner dazu geeignet ist, mindestens einen Sensor (100, 200, 300, 400) aufzunehmen, der an die Anschlusseinrichtung (500) angeschlossen werden soll und die Umgebungsbedingungen des Fahrzeugs (V) überwacht, wobei sich im Gehäuse ein Sensoradapter (10) befindet, um den mindestens einen Sensor (100, 200, 300, 400) zu halten,
wobei der Adapter (10) eine Anzahl von einem oder mehreren Montagebeschlägen aufweist, um den mindestens einen Sensor (100, 200, 300, 400) jeweils in einer Überwachungsposition zu halten, und
- ein Platzhalter (40) in das Gehäuse integriert ist, um einen Waschkörper einer Reinigungsvorrichtung in Position zu halten, um die Reinigung des mindestens einen Sensors zu ermöglichen,
und
einer Reinigungsvorrichtung (CD), die über einen pneumatischen und hydraulischen Strömungspfad (AFP, HFP) eines Reinigungsvorrichtungssystems (CDS) an einer Ventilanordnung (VA) anschließbar ist, und einem Sensor (S), der **dadurch gekennzeichnet ist, dass**
- die Reinigungsvorrichtung (CD) zur Waschreinigung, insbesondere Sprühreinigung, einer Sensoroberfläche (S101) des Sensors (S) ausgelegt ist, wobei die Reinigungsvorrichtung (CD) einen Waschkörper (400) umfasst, der über eine Waschversorgungsperipherie an die Ventilanordnung (VA) anschließbar ist, wobei
- die Ventilanordnung (VA) zur Steuerung der selektiven Versorgung mit flüssigem Fluid aus einem Flüssigkeitsreservoir (MQL) zum Einlass für flüssiges Fluid und/oder von Druckluftfluid aus einem Druckluftreservoir (MQA) zum Drucklufteinlass ausgelegt ist.

2. Gehäuseintegrierte Sensor- und Reinigungsvorrichtung (1A, 1B, 2A, 2B, 3, 4, 4A, 4B) nach Anspruch 1, **dadurch gekennzeichnet, dass** die Anzahl der einen oder mehreren Montagehalterungen so ausgelegt ist, dass sie eine Vielzahl von Sensoren aufnehmen können, und zwar eine Vielzahl von Sensoren gleicher Art oder eine Vielzahl von Sensoren unterschiedlicher Art.

3. Gehäuseintegrierte Sensor- und Reinigungsvorrichtung (1A, 1B, 2A, 2B, 3, 4, 4A, 4B) nach Anspruch 1 oder 2, **dadurch gekennzeichnet, dass** der Platzhalter und/oder die Anschlusseinrichtung Teil der Gehäusewand ist.

4. Gehäuseintegrierte Sensor- und Reinigungsvorrichtung (1A, 1B, 2A, 2B, 3, 4, 4A, 4B) nach einem der Ansprüche 1 bis 3,
**dadurch gekennzeichnet, dass** die Anschlusseinrichtung (500) umfasst
- einen Sensoranschluss (510) in Form einer elektronischen Schnittstelle zum Anschluss des Sensors an eine Daten- und/oder Energieversorgung des Fahrzeugs und
- einen Waschanschluss (520) in Form einer Anschlussarmatur zum Anschließen des Waschkörpers an die Reinigungsvorrichtung.

5. Gehäuseintegrierte Sensor- und Reinigungsvorrichtung (1A, 1B, 2A, 2B, 3, 4, 4A, 4B) nach einem der Ansprüche 1 bis 4, **dadurch gekennzeichnet, dass** der Waschkörper (400) in das Sensorgehäuse am Platzhalter (40) integriert ist.

6. Gehäuseintegrierte Sensor- und Reinigungsvorrichtung (1A, 1B, 2A, 2B, 3, 4, 4A, 4B) nach einem der Ansprüche 1 bis 5,
**dadurch gekennzeichnet, dass** in das Gehäuse ein elektronischer Schnittstellenstecker und/oder ein Versorgungsanschlussstecker integriert ist.

7. Gehäuseintegrierte Sensor- und Reinigungsvorrichtung (1A, 1B, 2A, 2B, 3, 4, 4A, 4B) nach einem der Ansprüche 1 bis 6,
**dadurch gekennzeichnet, dass** sich der Sensoradapter an einer Innenseite der Gehäusewand gegenüber dem Platzhalter befindet.

8. Gehäuseintegrierte Sensor- und Reinigungsvorrichtung (1A, 1B, 2A, 2B, 3, 4, 4A, 4B) nach einem der Ansprüche 1 bis 6,
**dadurch gekennzeichnet, dass** das Sensorgehäuse (1000) eine Trägerwand aufweist, wobei sich der Platzhalter (40) auf einer Außenseite der Trägerwand und der Sensoradapter auf einer Innenseite der Trägerwand befindet.

9. Gehäuseintegrierte Sensor- und Reinigungsvorrichtung (1A, 1B, 2A, 2B, 3, 4, 4A, 4B) nach einem der Ansprüche 1 bis 8,
**dadurch gekennzeichnet, dass** der Platzhalter und der Sensoradapter einander gegenüberliegend angeordnet sind, wobei vorteilhafterweise die Trägerwand derart ausgelegt ist, dass auf der Außenseite der Platzhalter (40) und auf einer Innenseite der Sensoradapter (10) gehalten werden.

10. Gehäuseintegrierte Sensor- und Reinigungsvorrichtung (1A, 1B, 2A, 2B, 3, 4, 4A, 4B) nach einem der Ansprüche 1 bis 9, **dadurch gekennzeichnet, dass** das Gehäuse ein Heizelement (600) hält, und/oder dass das Heizelement in einer Gehäusewand des Gehäuses (20), insbesondere in der Trägerwand, integriert ist.

11. Gehäuseintegrierte Sensor- und Reinigungsvorrichtung (1A, 1B, 2A, 2B, 3, 4, 4A, 4B) nach einem der Ansprüche 1 bis 10, **dadurch gekennzeichnet, dass** die Anschlusseinrichtung (500) im Gehäuse entfernt von der Trägerwand platziert ist.

12. Gehäuseintegrierte Sensor- und Reinigungsvorrichtung (1A, 1B, 2A, 2B, 3, 4, 4A, 4B) nach einem der Ansprüche 1 bis 11, **dadurch gekennzeichnet, dass** der Sensoradapter (10) und/oder die Trägerwand eine Einstelleinrichtung für die Feineinstellung der Überwachungsposition, insbesondere Winkel- und/oder Aufstellposition, aufweist.

13. Gehäuseintegrierte Sensor- und Reinigungsvorrichtung (1A, 1B, 2A, 2B, 3, 4, 4A, 4B) nach einem der Ansprüche 1 bis 12, **dadurch gekennzeichnet, dass** der Sensoradapter (10) und/oder der Platzhalter (40) vom Sensorgehäuse, insbesondere von einer Gehäusewand des Gehäuses (20), abnehmbar ist.

14. Gehäuseintegrierte Sensor- und Reinigungsvorrichtung (1A, 1B, 2A, 2B, 3, 4, 4A, 4B) nach einem der Ansprüche 1 bis 13, **dadurch gekennzeichnet, dass** der Sensoradapter (10) zur Aufnahme einer Anzahl von einem oder mehreren Sensoren (100, 200, 300) und/oder der Platzhalter (40) zur Aufnahme einer Anzahl von einem oder mehreren Waschkörpern (400, 401, 402, 403) ausgelegt ist.

15. Gehäuseintegrierte Sensor- und Reinigungsvorrichtung (1A, 1B, 2A, 2B, 3, 4, 4A, 4B) nach einem der Ansprüche 1 bis 14, **dadurch gekennzeichnet, dass** der Sensor (100, 200, 300) einer der Sensoren ist, der ausgewählt ist aus der Gruppe bestehend aus RADAR-, LiDAR-, optischem Sensor, insbesondere einer Kamera und/oder einer Beleuchtungsvorrichtung, insbesondere einem Frontscheinwerfer.

16. Gehäuseintegrierte Sensor- und Reinigungsvorrichtung (1A, 1B, 2A, 2B, 3, 4, 4A, 4B) nach einem der Ansprüche 1 bis 15, **dadurch gekennzeichnet, dass** die Anzahl der einen oder mehreren Montagehalterungen derart ausgelegt ist, dass sie eine Vielzahl von Sensoren aufnehmen können, und zwar in Kombination eine Vielzahl von Sensoren der Art: RADAR- und/oder LiDAR sowie eine Kamera und eine Beleuchtungsvorrichtung, insbesondere eine Beleuchtungsvorrichtung in Form eines Frontscheinwerfers.

17. Gehäuseintegrierte Sensor- und Reinigungsvorrichtung (1A, 1B, 2A, 2B, 3, 4, 4A, 4B) nach einem der Ansprüche 1 bis 16,
**dadurch gekennzeichnet, dass** der Waschkörper (400) einer der Waschkörper ist, die aus der Gruppe ausgewählt sind, die aus Sprühkörpern, Impulsstrahlkörpern, Flüssigkeits- und/oder Luftstromkörpern besteht.

18. Gehäuseintegrierte Sensor- und Reinigungsvorrichtung nach einem der Ansprüche 1 bis 17, **dadurch gekennzeichnet, dass** der Waschkörper (400) eine Waschdüse und ein Körpergehäuse mit einem Anschluss für flüssiges Fluid an einen Flüssigkeitseinlass und einem Druckluftfluidanschluss an einen Drucklufteinlass des Körpergehäuses sowie einen Waschpfad in der Waschdüse zum Ausgeben eines Reinigungsfluids an die Sensoroberfläche aufweist, wobei der Waschkörper (400) insbesondere ein Sprühkörper mit einer Sprühdüse und einer Mischkammer ist.

19. Fahrzeug (V), insbesondere Nutzfahrzeug (NV) mit mindestens einer gehäuseintegrierten Sensor- und Reinigungsvorrichtung nach einem der Ansprüche 1 bis 18, mit mindestens einem Sensor, wobei der mindestens eine Sensor (S100) insbesondere zu einem ADAS-System gehört.

## Revendications

1. Dispositif de capteur et de nettoyage (1A, 1B, 2A, 2B, 3, 4, 4A, 4B) intégré dans un logement avec
un logement de capteur (1000) destiné à être monté sur un véhicule (V), en particulier un véhicule utilitaire (CV), et un moyen connecteur (500) est intégré au logement, dans lequel le logement de capteur (1000) est conçu en outre pour loger au moins un capteur (100, 200, 300, 400) à connecter au moyen connecteur (500) et pour surveiller des conditions environnementales du véhicule (V), dans lequel un adaptateur de capteur (10) est disposé dans le logement pour maintenir l'au moins un capteur (100, 200, 300, 400),
dans lequel l'adaptateur (10) a un certain nombre d'un ou plusieurs raccords de montage pour maintenir l'au moins un capteur (100, 200, 300, 400) chacun dans une position de surveillance, et
- un espace réservé (40) est intégré au logement pour maintenir un corps de lave-capteur d'un dispositif de nettoyage en position afin de permettre le nettoyage de l'au moins un capteur,
et
un dispositif de nettoyage (CD) pouvant être raccordé à un ensemble valve (VA) par un chemin d'écoulement pneumatique et hydraulique (AFP, HFP) d'un système de dispositif de nettoyage (CDS) et pouvant être connecté à un capteur (S) **caractérisé en ce que**
- le dispositif de nettoyage (CD) est conçu pour un nettoyage par lavage, en particulier un nettoyage par pulvérisation, d'une surface de capteur (S101) du capteur (S), le dispositif de nettoyage (CD) comprenant un corps de lave-capteur (400) pouvant être raccordé par une périphérie d'alimentation de lave-capteur à l'ensemble valve (VA), dans lequel
- l'ensemble valve (VA) est conçu pour commander une alimentation sélective de fluide liquide à partir d'un réservoir à liquide (MQL) vers l'entrée de fluide liquide et/ou de fluide d'air sous pression à partir d'un réservoir d'air sous pression (MQA) vers l'entrée d'air sous pression.

2. Dispositif de capteur et de nettoyage (1A, 1B, 2A, 2B, 3, 4, 4A, 4B) intégré dans un logement selon la revendication 1 **caractérisé en ce que** le nombre du ou des raccords de montage est conçu pour maintenir une multitude de capteurs, à savoir une multitude de capteurs du même type ou une multitude de capteurs de types différents.

3. Dispositif de capteur et de nettoyage (1A, 1B, 2A, 2B, 3, 4, 4A, 4B) intégré dans un logement selon la revendication 1 ou 2 **caractérisé en ce que** l'espace réservé et/ou le moyen connecteur font partie de la paroi de logement.

4. Dispositif de capteur et de nettoyage (1A, 1B, 2A, 2B, 3, 4, 4A, 4B) intégré dans un logement selon l'une des revendications 1 à 3 **caractérisé en ce que** le moyen connecteur (500) comprend
- un connecteur de capteur (510) sous forme d'une interface électronique pour connecter le capteur à une alimentation en données et/ou en énergie du véhicule et
- un connecteur de lave-capteur (520) sous forme d'un raccord de connexion pour connecter le corps de lave-capteur au dispositif de nettoyage.

5. Dispositif de capteur et de nettoyage (1A, 1B, 2A, 2B, 3, 4, 4A, 4B) intégré dans un logement selon l'une des revendications 1 à 4 **caractérisé en ce que** le corps de lave-capteur (400) est intégré au logement de capteur sur l'espace réservé (40).

6. Dispositif de capteur et de nettoyage (1A, 1B, 2A, 2B, 3, 4, 4A, 4B) intégré dans un logement selon l'une des revendications 1 à 5 **caractérisé en ce qu'**une prise d'interface électronique et/ou une prise de connexion d'alimentation sont intégrées au logement.

7. Dispositif de capteur et de nettoyage (1A, 1B, 2A, 2B, 3, 4, 4A, 4B) intégré dans un logement selon l'une des revendications 1 à 6 **caractérisé en ce que** l'adaptateur de capteur est disposé au niveau d'un côté interne de la paroi de logement en face de l'espace réservé.

8. Dispositif de capteur et de nettoyage (1A, 1B, 2A, 2B, 3, 4, 4A, 4B) intégré dans un logement selon l'une des revendications 1 à 6 **caractérisé en ce que** le logement de capteur (1000) a une paroi de support, dans lequel l'espace réservé (40) est disposé sur un côté externe de la paroi de support et l'adaptateur de capteur est disposé sur un côté interne de la paroi de support.

9. Dispositif de capteur et de nettoyage (1A, 1B, 2A, 2B, 3, 4, 4A, 4B) intégré dans un logement selon l'une des revendications 1 à 8 **caractérisé en ce que** l'espace réservé et l'adaptateur de capteur sont agencés l'un en face de l'autre, avantageusement dans lequel la paroi de support est conçue pour maintenir sur le côté externe l'espace réservé (40) et sur un côté interne l'adaptateur de capteur (10).

10. Dispositif de capteur et de nettoyage (1A, 1B, 2A, 2B, 3, 4, 4A, 4B) intégré dans un logement selon l'une des revendications 1 à 9 **caractérisé en ce que** le logement maintient un élément chauffant (600) et/ou l'élément chauffant est intégré dans une paroi de logement du boîtier (20), en particulier dans la paroi de support.

11. Dispositif de capteur et de nettoyage (1A, 1B, 2A, 2B, 3, 4, 4A, 4B) intégré dans un logement selon l'une des revendications 1 à 10 **caractérisé en ce que** le moyen connecteur (500) est placé dans le logement à l'écart de la paroi de support.

12. Dispositif de capteur et de nettoyage (1A, 1B, 2A, 2B, 3, 4, 4A, 4B) intégré dans un logement selon l'une des revendications 1 à 11 **caractérisé en ce que** l'adaptateur de capteur (10) et/ou la paroi de support fournissent un moyen d'ajustement pour régler finement la position de surveillance, en particulier une position angulaire et/ou de mise en place.

13. Dispositif de capteur et de nettoyage (1A, 1B, 2A, 2B, 3, 4, 4A, 4B) intégré dans un logement selon l'une des revendications 1 à 12 **caractérisé en ce que** l'adaptateur de capteur (10) et/ou l'espace réservé (40) sont détachables du logement de capteur, en particulier d'une paroi de logement du boîtier (20).

14. Dispositif de capteur et de nettoyage (1A, 1B, 2A, 2B, 3, 4, 4A, 4B) intégré dans un logement selon l'une des revendications 1 à 13 **caractérisé en ce que** l'adaptateur de capteur (10) est conçu pour recevoir un certain nombre d'un ou plusieurs capteurs (100, 200, 300) et/ou l'espace réservé (40) est conçu pour recevoir un certain nombre d'un ou plusieurs corps de lave-capteur (400, 401, 402, 403).

15. Dispositif de capteur et de nettoyage (1A, 1B, 2A, 2B, 3, 4, 4A, 4B) intégré dans un logement selon l'une des revendications 1 à 14 **caractérisé en ce que** le capteur (100, 200, 300) est l'un parmi les capteurs choisis dans le groupe constitué par capteur RADAR, LiDAR, optique, en particulier une caméra et/ou un dispositif d'éclairage, en particulier un phare.

16. Dispositif de capteur et de nettoyage (1A, 1B, 2A, 2B, 3, 4, 4A, 4B) intégré dans un logement selon l'une des revendications 1 à 15 **caractérisé en ce que** le nombre du ou des raccords de montage est conçu pour maintenir une multitude de capteurs, à savoir en combinaison avec une multitude de capteurs du type : RADAR et/ou LiDAR et une caméra et un dispositif d'éclairage, en particulier un dispositif d'éclairage sous forme d'un phare.

17. Dispositif de capteur et de nettoyage (1A, 1B, 2A, 2B, 3, 4, 4A, 4B) intégré dans un logement selon l'une des revendications 1 à 16 **caractérisé en ce que** le corps de lave-capteur (400) est l'un parmi les corps de lave-capteur choisis dans le groupe constitué par corps de pulvérisation, corps à jet pulsé, corps à flux de liquide et/ou d'air.

18. Dispositif de capteur et de nettoyage intégré dans un logement selon l'une des revendications 1 à 17, **caractérisé en ce que** le corps de lave-capteur (400) a une buse de lave-capteur et un logement de corps, avec un raccordement de fluide liquide à une entrée de liquide et un raccordement de fluide d'air sous pression à une entrée d'air sous pression du logement de corps, et un chemin de lave-capteur dans la buse de lave-capteur permettant de faire sortir un fluide de nettoyage vers la surface de capteur, en particulier dans lequel le corps de lave-capteur (400) est un corps de pulvérisation avec une buse de pulvérisation et une chambre de mélange.

19. Véhicule (V), en particulier un véhicule utilitaire (CV) avec au moins un dispositif de capteur et de nettoyage intégré dans un logement selon l'une des revendications 1 à 18, avec au moins un capteur dans lequel l'au moins un capteur (S100), est en particulier d'un système ADAS.
